# EUROPEAN PATENT APPLICATION

(11) **EP 2 362 615 A1**
(43) Date of publication of application: **31.08.2011**
(21) Application number: 11154524.0
(22) Date of filing: 15.02.2011
(51) Int. Cl.: H04M 1/2745, H04M 1/725, G06F 3/048, H04L 12/58

(54) **Method, program and system for displaying a contact object icon and corresponding contact's status on one or more communications services in a display of a mobile communications device**

(30) Priority: 15.02.2010 US 304750 P
(71) Applicant: RESEARCH IN MOTION LIMITED, Waterloo, Ontario N2L 3W8 (CA)
(72) Inventor: Mujkic Alen, Mississauga Ontario L4W 0B4 (CA)
(74) Representative: Fennell, Gareth Charles

(57) **Abstract**

Communicating with a contact over one of a plurality of communications services accessible via a mobile communications device. Representing a contact's association with each of the communication services by a contact object. Displaying the contact object on a display of the device. Receiving a first input directed to the contact object, and in response, displaying the status of the contact with respect to each of the communications services. For a displayed status indicating "available," or the equivalent thereof, upon receiving a user second input directed to the status, initiating communication with the contact via the service.

## Description

### FIELD OF THE DISCLOSURE

The present disclosure finds exemplary use in electronic devices. Furthermore, the present disclosure also relates to the user interfaces, as well as the software that controls and runs applications, of the electronic devices.

### BRIEF DESCRIPTION OF THE DRAWINGS

FIG. 1 depicts a handheld communication device.

FIG. 2 is a block diagram representing a wireless handheld communication device interacting in a communication network.

FIG. 3 a depicts a device-displayed home screen that shows a set of icons representing various applications available on the device and the email icon is highlighted.

FIG. 3b depicts a device-displayed home screen that shows another set of icons representing various applications available on the device and the email icon is highlighted;

FIG. 4 depicts a device-displayed home screen that shows a contact object highlighted.

FIG. 5 depicts a device-displayed home screen with a contact object status window.

FIG. 6 depicts a device-displayed home screen with a contact object status window including a highlighted communications service.

FIG. 7 depicts the communication service highlighted in FIG. 6 displayed on the device.

FIG. 8 depicts methods of the technology.

FIG. 9 illustrates a screen of a contacts application of the device with a specific entry highlighted as the focus of the user interface.

FIG. 10 depicts a menu that offers the action "Add to Home Screen" in reference to contact of FIG. 9.

In FIG. 11, upon choosing "Add to Home Screen" the technology allows a user to choose the picture for the contact objects, edit the label of the contact object, edit where the contact object will appear, and mark the contact item as a favorite.

FIG. 12 depicts a home screen of the device after a contact item has been added thereto.

FIG. 13 illustrates a drop down menu for designating where the contact object will appear.

FIG. 14 depicts advanced options for managing contact objects.

FIG. 15 depicts a contact object creation screen employing advanced options of FIG. 14 to associate a contact object for contact with the BB Messenger application as the default application when the contact object is chosen from the home screen of the device.

FIG. 16 illustrates use of the contact object concept extended to place a contact object for "Yahoo News" including picture on the home screen with a default action of opening a web browser to a uniform resource locator (URL).

FIG. 17 illustrates the resultant home screen display of the contact objects, disclosed above.

FIG. 18 illustrates example icon types that can be used for contact objects.

### DETAILED DESCRIPTION

Reference will now be made in detail to embodiments of the technology. Each example is provided by way of explanation of the technology only, not as a limitation of the technology. It will be apparent to those skilled in the art that various modifications and variations can be made in the present technology without departing from the scope or spirit of the technology. For instance, features described as part of one embodiment can be used on another embodiment to yield a still further embodiment. Thus, it is intended that the present technology cover such modifications and variations that come within the scope of the technology.

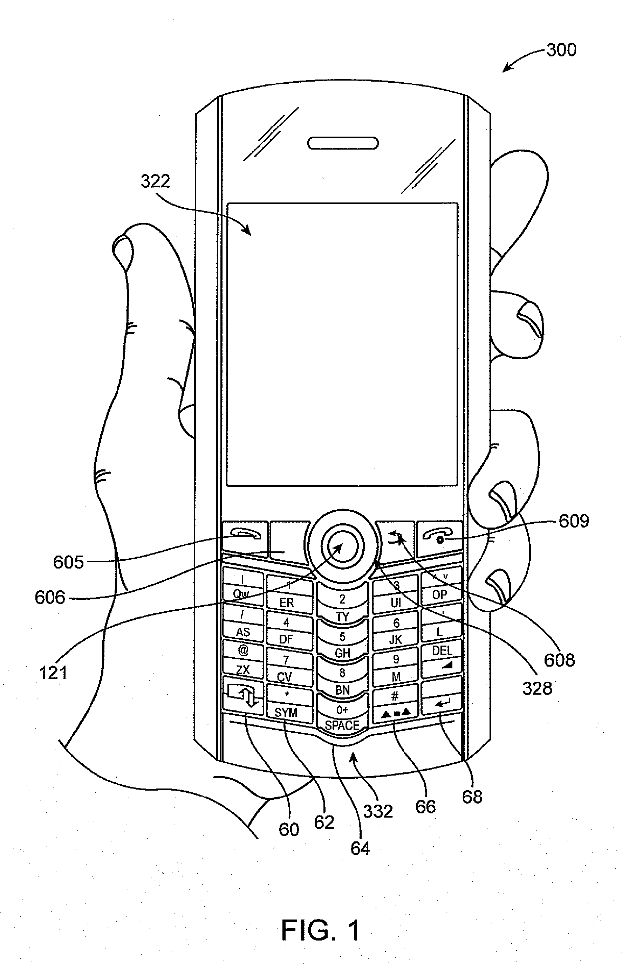

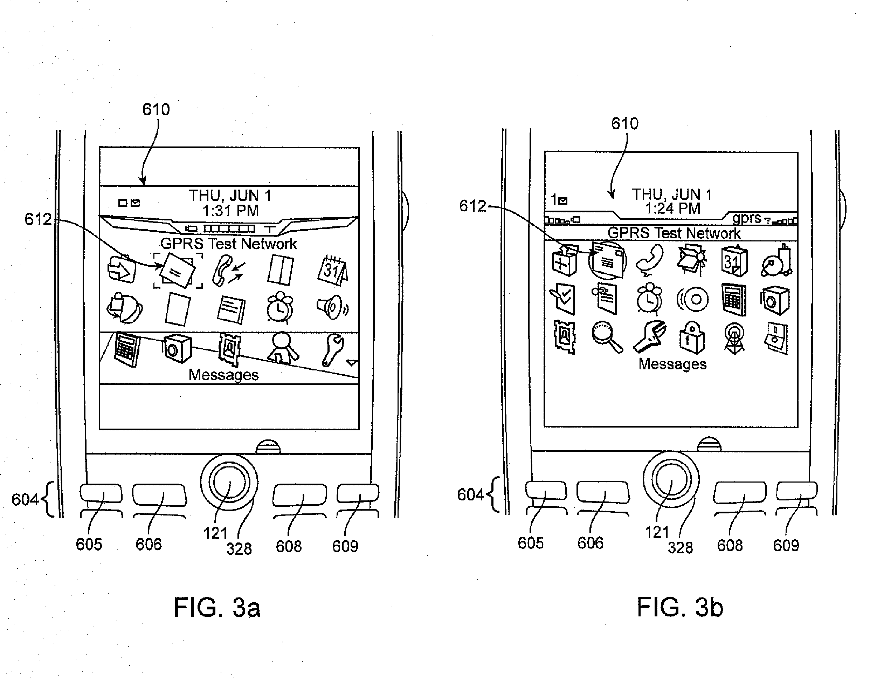

In the embodiment depicted in FIG. 1, a mobile communication device 300 has a first input, which can be an auxiliary I/O subsystem 328 having a depressible rolling member or trackball 121, which can be used to select an icon (e.g., 612 - see FIG. 3 where the selected icon is highlighted) displayed on a display 322 of the device 300. I/O subsystem 328 also can be an input interface of other types including a track pad, a touch pad, touch screen, a mouse, a graphics tablet, a joystick, a pointing stick, or other pointing device. The handheld device 300 also has a second input controller, in this case menu key 606, which can be used to access the applicable menus of commands and options related to icons 612 and to the device generally 618. Such menus 618, 624 are based on the interface principle of see and click. In this manner, users do not have to remember commands or options because they can view these options at any time, e.g., by indicating and selecting an icon 612.

FIG. 1 also depicts a display screen 322 and keyboard 332. The display screen 322 serves as a user interface (UI) visually presenting information to the user. The trackball 121 and the menu key 606 are part of the input portion 604 (see FIG. 3). To the right of the trackball 121 is a back key 608, which can be used to back-up through previous screens or menus displayed on the display screen 322.

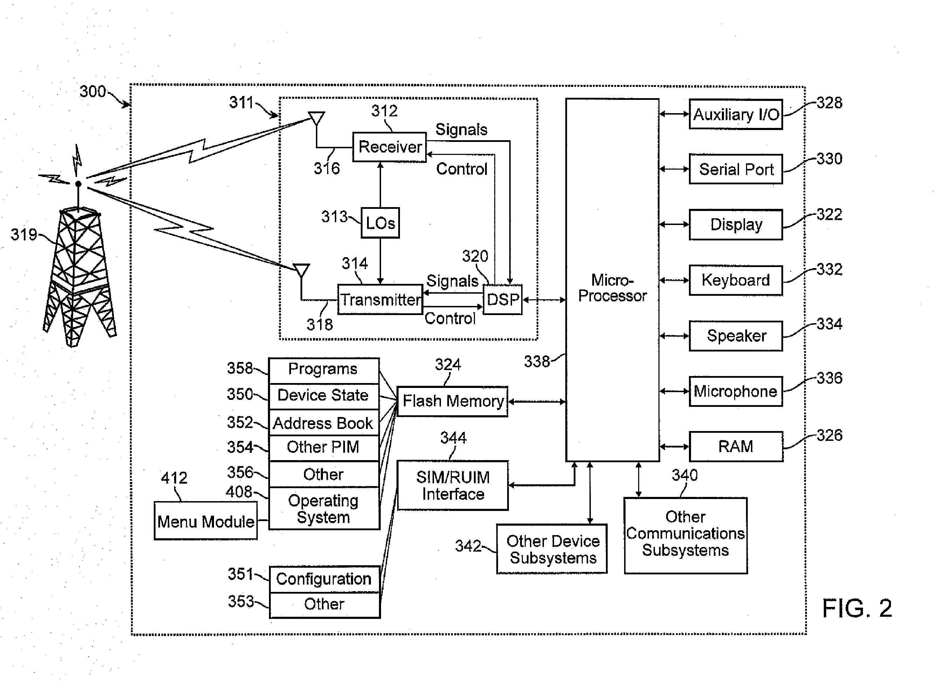

The initial screen for the device 300 is a home screen 610. Two examples of a home screen 610 are shown in FIGS. 3a and 3b, which show different sets of icons, e.g., 612, representing various applications (e.g., 358 of FIG. 2) that are available on the device 300. The user can select (e.g., scroll to and click) desired high-level activities from the home screen 610, and within an application 358 explore and access functionality of the selected application 358.

The menu key or button 606 is to the left of the trackball 121 and activates an extended menu 618 that lists actions likely desirable relative to the presently displayed screen 610. The menu key or button 606 provides a consistent location where the user can look for commands. Each application 358 has its own extended menu 618 comprising application-specific menu items. In at least one embodiment, the extended menu 618 lists all available menu items for that application 358.

Clicking (depressing) the trackball 121 when an icon on the home screen 610 is selected (612 e.g., as indicated by highlighting in FIG. 3b) opens the application 358, preferably to a common page used by users. For example, if the email message's icon 612 is highlighted, then a page listing the messages will open. When not on the home screen 610, but while a page of an application 358 is displayed without a menu showing, clicking the trackball 121 is referred to as an ambiguous selection since several commands may apply in that circumstance. This ambiguous selection can cause a short menu to appear on the display screen 322. A short menu typically contains a list of menu items that can be the most commonly used commands in the present screen context. These short menus 624 again can be based on the interface principle of see and click. The options or menus can change according to the task at hand or location of the cursor on the display screen 322.

The items shown in these short menus 624 can be those that a user performs frequently. In other embodiments, the short menu 624 can be selected based on either predefined user or programmer preference. These short menus 624 can be preferably correctly organized, worded clearly, and behave correctly in order for the user to understand what options they should expect to see, and how to access the additional functionality specific to the selected application 358.

In at least one embodiment, the items displayed in the short menu 624 are dynamically updated depending upon the user's selection of items from the extended menu 618. As items are repeatedly selected from the extended menu 618, the menu items can be ranked and depending upon their frequency of selection will relatively appear in the short menu 624. The number of items in the short menu 624 is preferably between two and ten items. The items displayed in the short menu 624 can also be user selected in one embodiment.

In another embodiment, the information for the short menu 624 is stored locally as well as at a central location. The transmission of the short menus 624 that are applicable for the particular user is via a communication system as described below. The information stored at the central location allows the user to access that information on multiple devices. This will allow the user to experience identical menus on different devices. This is helpful when a user would like to encounter the same interface, but uses the devices in different ways. The information alternatively may be stored on a memory card and transferred between devices via the memory card.

For purposes of example, in the following example, the use of the menus 618, 624, trackball 121 and keys are discussed relative to the use of an email message application 358.

Initially, the user may use the trackball 121 to indicate an icon, e.g., 612. In FIGS. 3a and 3b, the email icon 612 (a letter envelope) is highlighted in a conventional manner, for example, with a frame as shown in FIG. 3a or with a highlighted background as depicted in FIG. 3b.

An exemplary block diagram for a handheld electronic device 300 and its cooperation in a wireless network 319 is illustrated in FIG. 2. This figure is exemplary only, and those persons skilled in the art will appreciate the additional elements and modifications necessary to make the device 300 work in particular network environments.

The block diagram of FIG. 2 shows a processor 338 that controls the operation of the device 300. A communication subsystem 311 performs communication transmission and reception with the wireless network 319. The processor 338 further connects with an auxiliary input/output (I/O) subsystem 328. In at least one embodiment, the processor module 338 can be coupled to a serial port (preferably a Universal Serial Bus port) 330 that can allow for communication with other devices or systems. A display 322 can be coupled to the processor 338 to allow for display of information to a user of the device 300. When the device 300 is equipped with a keyboard, the keyboard 332 can be coupled to the processor module 338. The device can include a speaker 334, a microphone 336, random access memory (RAM) 326, and flash memory 324. Other communication subsystems 340 and other device subsystems 342 are generally indicated as being functionally connected with the processor 338 as well. An example of a communication subsystem 340 is that of a short range communication system such as BLUETOOTH® communication module or device WI-FI® communication module (a communication module in compliance with IEEE 802.11 set of protocols) and associated circuits and components. Additionally, the processor 338 is able to perform operating system 408 functions and preferably enables execution of software applications on the communication device 300.

The included auxiliary I/O subsystem 328 can take the form of a variety of different navigation tools including a trackball 121, a thumbwheel, a navigation pad, a touch pad, joystick, mouse, track pad, pointing stick, graphics tablet, and touch screen just as examples. These navigation tools can be located on the front surface of the device 300 but may be located on any exterior surface of the device 300. Other auxiliary I/O devices can include external display devices and externally connected keyboards (not shown). While the above examples have been provided in relation to the auxiliary I/O subsystem 328, other subsystems capable of providing input or receiving output from the handheld electronic device 300 are considered within the scope of this disclosure. Additionally, other keys may be placed along the side of the device 300 to function as escape keys, volume control keys, scrolling keys, power switches, or user programmable keys, and may likewise be programmed accordingly.

In an exemplary embodiment, the flash memory 324 is enabled to provide a storage location for the operating system 408, device programs 358, and data. The operating system 408 is generally configured to manage other application programs 358 that are also stored in memory 324 and executable on the processor 338. The operating system 408 honors requests for services made by application programs 358 through predefined application program 358 interfaces. More specifically, the operating system 408 typically determines the order in which multiple applications 358 executed on the processor 338 and the execution time allotted for each application 358, manages the sharing of memory 324 among multiple applications 358, handles input and output to and from other device subsystems 342, and so on. In addition, users can typically interact directly with the operating system 408 through a user interface usually including the keyboard 332 and display screen 322. While the operating system 408 in a preferred embodiment is stored in flash memory 324, the operating system 408 in other embodiments is stored in read-only memory (ROM) or similar storage element (not shown). As those skilled in the art will appreciate, the operating system 408, device application 358 or parts thereof may be loaded in RAM 326 or other volatile memory.

In a preferred embodiment, the flash memory 324 contains programs/applications 358 for execution on the device 300 including an address book 352, a personal information manager (PIM) 354, and the device state 350. Furthermore, programs 358 and other information 356 including data can be segregated upon storage in the flash memory 324 of the device 300.

When the device 300 is enabled for two-way communication within the wireless communication network 319, it can send and receive signals from a mobile communication service. Examples of communication systems enabled for two-way communication include, but are not limited to, the General Packet Radio Service (GPRS) network, the Universal Mobile Telecommunication Service (UMTS) network, the Enhanced Data for Global Evolution (EDGE) network, the Code Division Multiple Access (CDMA) network, High-Speed Packet Access (HSPA) networks, Universal Mobile Telecommunication Service Time Division Duplexing (UMTS-TDD), Ultra Mobile Broadband (UMB) networks, Worldwide Interoperabil-ity for Microwave Access (WiMAX), and other networks that can be used for data and voice, or just data or voice. For the systems listed above, the communication device 300 must be properly enabled to transmit and receive signals from the communication network 319. Other systems may not require such identifying information. GPRS, UMTS, and EDGE require the use of a SIM (Subscriber Identity Module) in order to allow communication with the communication network 319. Likewise, most CDMA systems require the use of a RUIM (Removable Identity Module) in order to communicate with the CDMA network. The RUIM and SIM card can be used in multiple different communication devices 300. The communication device 300 may be able to operate some features without a SIM/RUIM card, but it will not be able to communicate with the network 319. A SIM/RUIM interface 344 located within the device 300 allows for removal or insertion of a SIM/RUIM card (not shown). The SIM/RUIM card features memory and holds key configurations 351, and other information 353 such as identification and subscriber related information. With a properly enabled communication device 300, two-way communication between the communication device 300 and communication network 319 is possible.

If the communication device 300 is enabled as described above or the communication network 319 does not require such enablement, the two-way communication enabled device 300 is able to both transmit and receive information from the communication network 319. The transfer of communication can be from the device 300 or to the device 300. In order to communicate with the communication network 319, the device 300 in a preferred embodiment is equipped with an integral or internal antenna 318 for transmitting signals to the communication network 319. Likewise the communication device 300 in the preferred embodiment is equipped with another antenna 316 for receiving communication from the communication network 319. These antennae (316, 318) in another preferred embodiment are combined into a single antenna (not shown). As one skilled in the art would appreciate, the antenna or antennae (316, 318) in another embodiment are externally mounted on the device 300.

When equipped for two-way communication, the communication device 300 features a communication subsystem 311. As is well known in the art, this communication subsystem 311 is modified so that it can support the operational needs of the device 300. The subsystem 311 includes a transmitter 314 and receiver 312 including the associated antenna or antennae (316, 318) as described above, local oscillators (LOs) 313, and a processing module 320 which in a preferred embodiment is a digital signal processor (DSP) 320.

It is contemplated that communication by the device 300 with the wireless network 319 can be any type of communication that both the wireless network 319 and device 300 are enabled to transmit, receive and process. In general, these can be classified as voice and data. Voice communication is communication in which signals for audible sounds are transmitted by the device 300 through the communication network 319. Data is all other types of communication that the device 300 is capable of performing within the constraints of the wireless network 319.

The menuing task is generally performed by a menuing subsystem or menu module 412 of an operating system 408 executing on a handheld electronic device 300. Accordingly, as illustrated relative to the handheld electronic device 300 of FIG. 2, a menu module 412 is implemented as part of the operating system 408. In general, the module 412 is configured to receive menu calls from various applications 358 and to service those calls by displaying a menu on a display screen 322 according to the parameters provided by the application 358 making the menu call. Although menu module 412 is illustrated as being part of operating system 408, it is noted that the module 412 might also function as a stand-alone module 412 stored in memory 324 and executable on a processor 338. In general, although the functioning of module 412 as part of operating system 408 is preferred, it is not intended as a limitation regarding its implementation by a handheld electronic device 300.

In addition to managing typical menu functions, the menu module 412 implements a menu in accordance with application programs 358 that support menus. Thus, for applications 358 designed to provide menus, hierarchal menu module 412 is configured to implement those menus as menus with ambiguous selection. The implementation of a menu with ambiguous selection can occur automatically for any application 358 making a menu call to operating system 408. Alternatively, it can occur based on a specific request from an application 358 to implement the menu with ambiguous selection. Thus, handheld electronic device 300 manufacturers can configure the devices to automatically provide menus which facilitate application developers. This enables application developers to design menus, both extended 618 and short 624, in a typical manner without making any changes to their application 358 source code. Alternatively, handheld electronic device 300 manufacturers can configure devices 300 to provide menus with ambiguous selection by default or upon request for application 358 developers. This enables application 358 developers to design menus in a typical manner and further allows them to determine if application 358 menus will be implemented as menus with ambiguous selection by making a simple selection through their application 358 source code to identify what action should occur in response to an ambiguous selection and populate short menus 624 with preferably those actions, tasks or other commands most commonly used with respect to the displayed page on the screen 322.

Referring to FIG. 3a and FIG. 3b, in typical operation starting from the home screen or menu 610, the trackball 121 can be used to scroll to and highlight the email message icon 612 as shown in FIGS. 3a and 3b. Clicking the trackball 121 directly opens the list of messages. The trackball 121 is clicked while no menu is present and this action is an ambiguous selection since more than one action or task is possible. This ambiguous selection while on the home screen 610 and with the email icon 612 highlighted is treated by the hierarchal menu module 412 as a direction or command to open the highlighted application 358. In this embodiment, it is believed that the user is attempting to perform the task of opening the email application program 358 and the hierarchal menu module 412 is programmed accordingly. Displaying the list of emails is the action or task believed to be the most common desired, and thus to the user, the procedure appears intuitive. Such ambiguous selection for other application 358 is preferably programmed with the most common desired task or action for the selected application 358.

With the advent of more robust wireless communications systems, handheld communication devices are becoming ubiquitous, as well as advanced. Furthermore, these higher-performance devices also can send and receive other types of data including data that allows viewing and use of Internet websites (including social networks such as offered by the Facebook® social network and Twitter® micro-blogging services) and real time chat. Such functionality calls for greater user interaction with the devices through user interfaces (UIs) that may originally have been designed to accommodate making and receiving telephone calls.

Most application programs, on mobile devices, laptop computers, and desktop computers are menu-driven as opposed to being command-driven. Menu-driven applications provide a list of action commands or options from which a user may choose, while command-driven applications require a user to enter explicit commands. Thus, menu-driven applications are generally easier for the average user to learn than are command-driven applications. Menus are typically implemented as a list of textual or graphical choices (i.e., menu items) from which a user can choose. Thus, menus allow a user to select a menu item, for example, by pointing to the item with a mouse and then clicking on the item. Examples of other methods of selecting menu items include highlighting an item and then hitting the "return" key or "enter" key and pressing directly on a menu item through a touch-sensitive screen. Further examples include touch-and-hold where the input device is a touch screen, and "hover" where the focus of the pointing device is left on an icon for a period of time without selecting the icon.

Over the past few decades, telecommunications services that call for real-time or near real time user presence have increased in use. Such services include conventional telephone voice communications, push-to-talk (e.g., Nextel Direct Connect®), video teleconferencing, instant messaging (e.g., AOL Instant Messenger®, Microsoft® Office Communicator), social network web sites (e.g., Faeebook®), and microblogging (e.g., Twitter®); and to a lesser extent e-mail. Use of presence-sensitive telecommunications services has increased to such an extent that outages are covered as news stories (e.g., "T-Mobile USA Restores Service After Outage," Wall Street Journal, November 4, 2009, "Twitter Downed by Denial of Service Attack," Information Week, August 6, 2009).

These technologies have driven a demand for conveying a user's presence information (e.g., "presentity") to parties who wish to communicate with the user. Given that it is not atypical for a user to be present via multiple telecommunication services concurrently, a party wishing to contact the user may need to interact with several applications to determine the user's status and initiate communications. For example, a user wishing to communicate with a frequent contact (e.g., a spouse, significant other, a manager) could initiate a phone call to the contact only to be notified by a presence server that the contact is unavailable. The user could attempt to communicate with the contact via instant messaging, only to find the contact is already engaged in another messaging session.

The present technology includes systems, methods, and computer program products to convey presence information for a contact across services, and to provide convenient menu placement for conveying the presence information and initiating communication with a contact. While exemplary embodiments are described with reference to a mobile device, the technology can find use in other platforms as well.

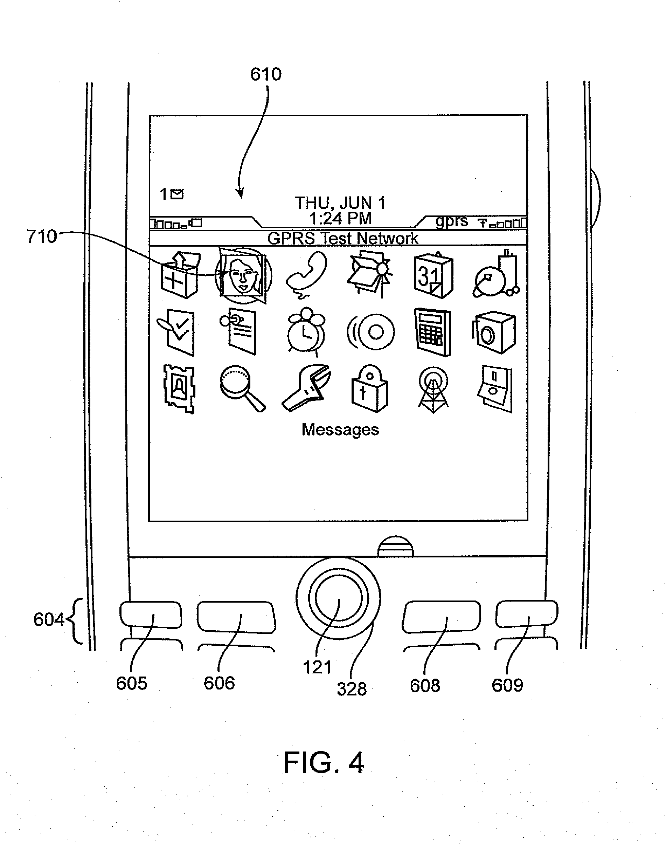

Referring to FIG. 4, a home screen 610 of a mobile device 300 is shown displaying a contact object icon 710 according to an embodiment of the present disclosure. Contact object icon 710 is depicted as an image of the contact, but can comprise an avatar, representative image or icon, or other icon known to represent a contact. The icon can include, or be accompanied by text information such as the contact's name, initials, or alias.

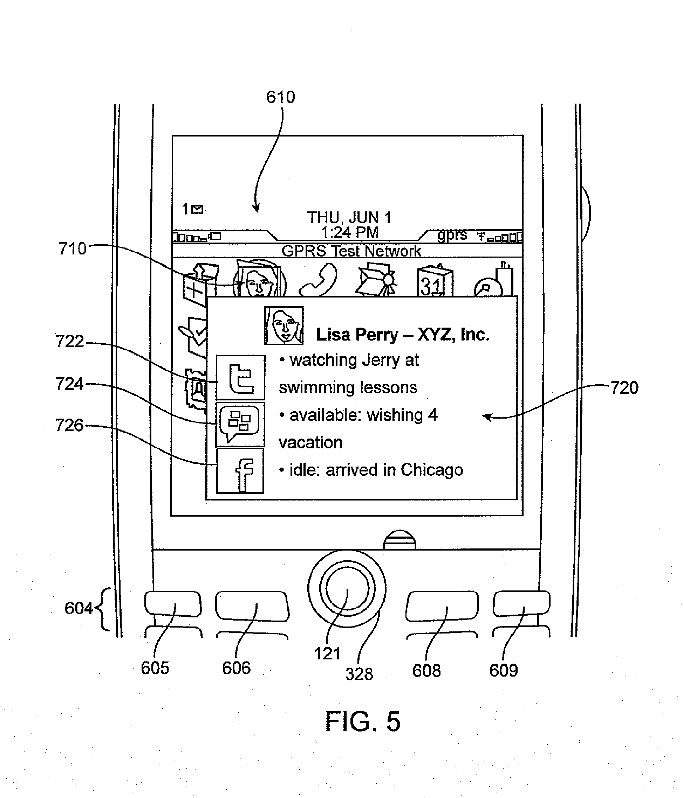

In some embodiments, a contact's status on one or more communication services can be shown on, adjacent to, or associated with the icon 710. In the embodiment illustrated in FIG. 5, the contact's status on each of three communications services, e.g., Twitter microblogging, BlackBerry® Messenger, and the Facebook social network, is indicated in a window 720. The contact's status for each service is next to an icon indicating the service. In the illustrated embodiment, for Twitter microblogging 722 the contact's latest tweet, "watching Jerry at swimming lessons" is shown; for BlackBerry Messenger 724 with contact's status "available" and custom message "wishing 4 vacation" is shown; and for Facebook social network 72, the contact's status is "idle" and a custom message "arrived in Chicago" is shown. These examples are provided as examples of most recent contact status that can be conveyed using the present disclosure. Other types of messages can be generated by the user or predefined for user selection to provide for an update in regards to the user's status.

In certain embodiments, e.g., where the status can be displayed on the icon 710, such status is displayed without further action on the part of the user. In some embodiments, e.g., where the contact is associated with a plurality of communication services as shown in FIG. 5, the status can be displayed in a pop-up window when the icon is indicated, e.g., a trackball 121 is used to roll a cursor over the icon 710, a user touches and holds the icon on a touch-pad, a trackball hovers over the icon, the icon is selected via click-and-hold. Where the contact is associated by the device with more communication services than are practical to display at once in the window 720, a scroll bar can be used to reveal services not initially shown. Similarly, where the status information for a service is longer than is practical to display in the window, scrolling text, e.g., a "stock ticker," can be used. In some embodiments presence information can be displayed when the user hovers over the icon representing the service.

Each contact object, e.g., 710 can be associated with a default action upon indication or selection. Such configuration can be automatic (by default or by dynamic determination of the device), or user-selected. Example default actions can include: view contact info; and communicate with contact. Default communication can be by variously determined, e.g., settable by the user; determined by the last method of communication between the user and the contact; determined by the most frequent method of communication between the user and the contact; determined by the method preferred by the contact. In some embodiments, each contact object can, upon selection, present a menu of choices such as, but not limited to, the ones above for action.

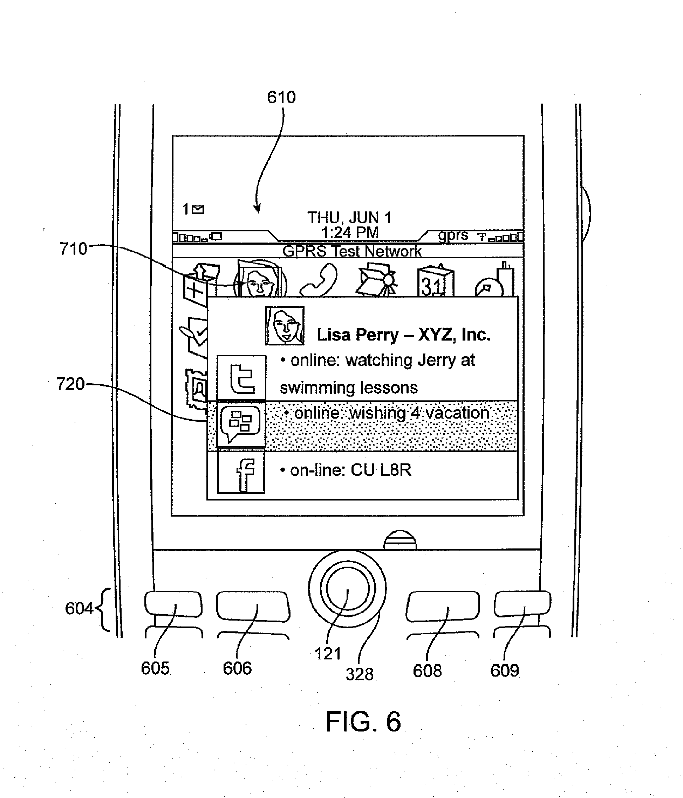

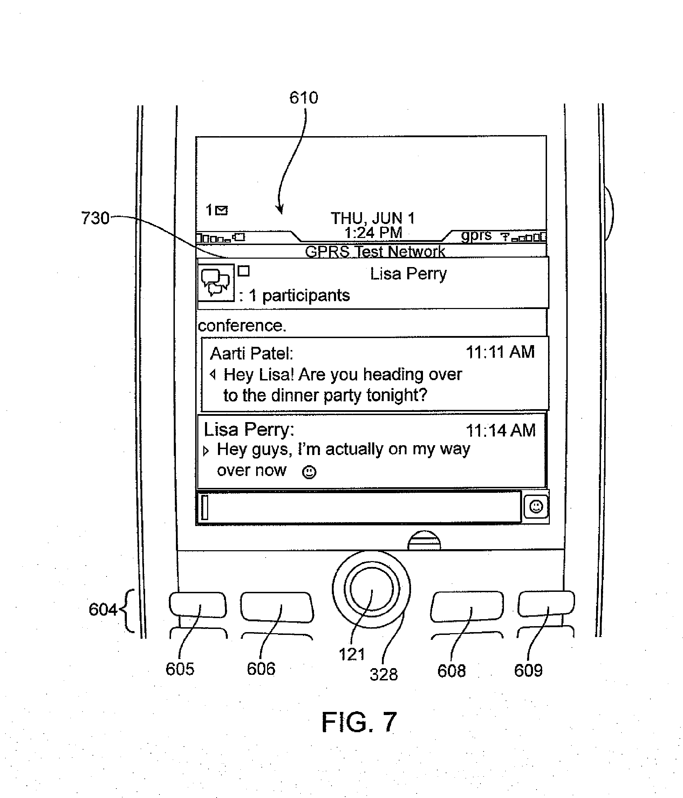

Referring to FIG. 6, after directing the focus of the interface to the contact object, (if required) performing a selection act such as hovering or clicking, and after a status window 720 is displayed by the device showing the status of the contact with respect to one or more communication services, the device will accept selection input from a user (shown as highlighted section 720). Referring to FIG. 7, the device receives such selection and initiates communication with the contact using the selected communication service, a chat screen of which is illustrated as 730.

In addition to the services illustrated in the figures, other communication services, including phone, push-to-talk, video teleconferencing, and e-mail can be represented in window 720.

The technology can create a contact object automatically for services known to be associated with the contact by the telecommunication system of which the device is a part. The technology can facilitate the creation of a contact object by a user via the address book of the device. The technology can display the contact object on the home page, another page, or even multiple pages of the device, and can accept user input for placing the contact object in those locations.

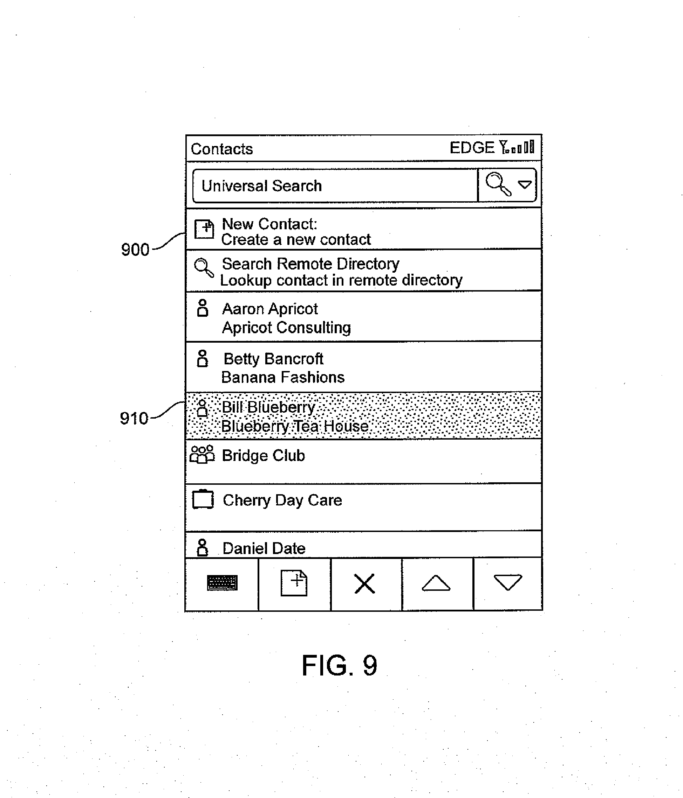

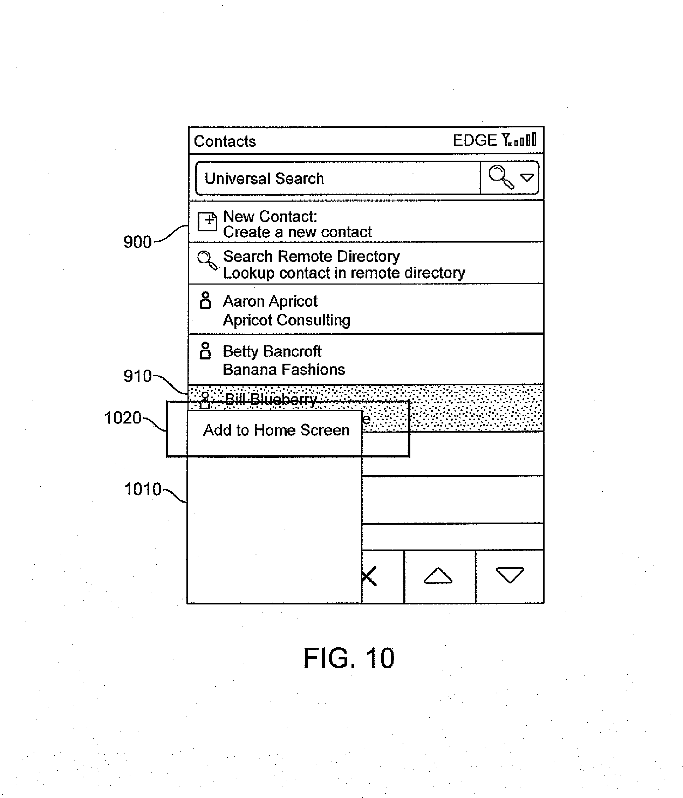

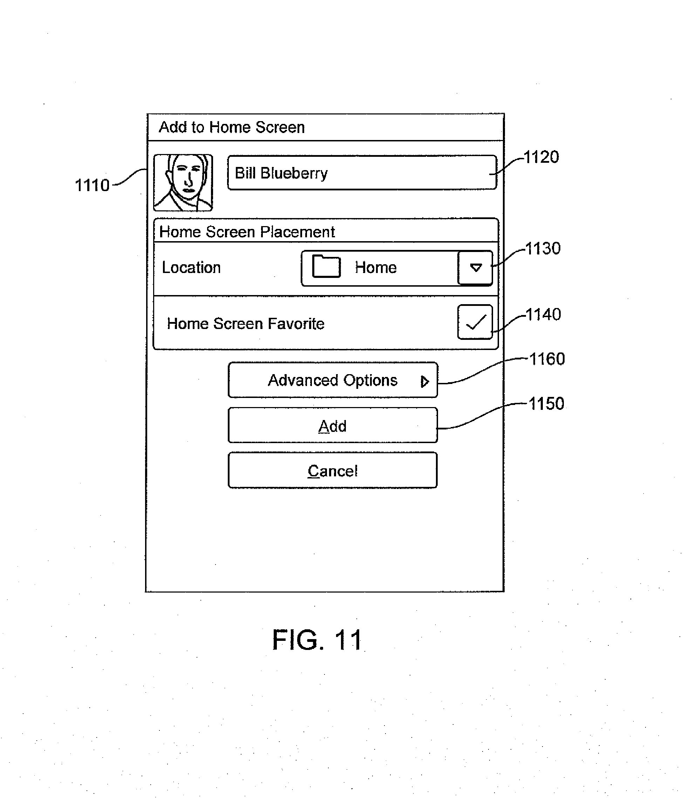

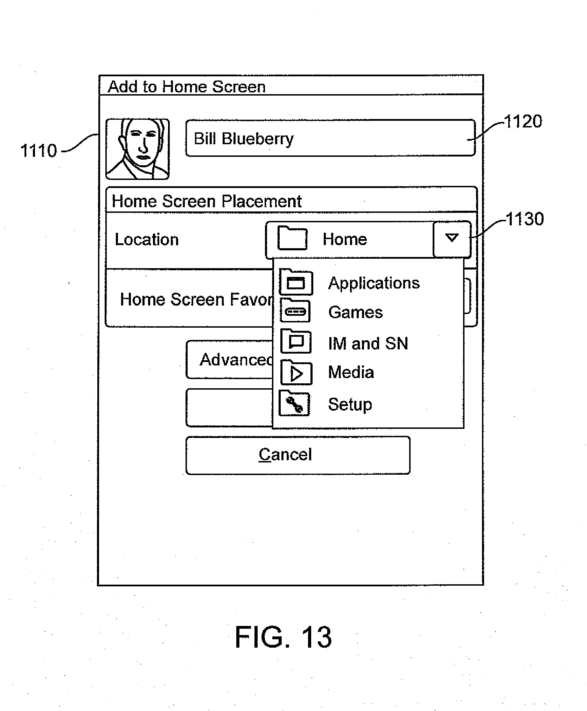

Referring to FIG. 9 through FIG. 18, in exemplary embodiments, the technology facilitates creation of contact objects. FIG. 9 illustrates a screen of a Contacts application 900 of the device with the entry "Bill Blueberry" highlighted 910 as the focus of the user interface. In FIG. 10, a menu 1010 offers the action "Add to Home Screen" 1020 in reference to contact "Bill Blueberry." Referring to FIG. 11, upon choosing "Add to Home Screen" the technology allows a user to choose the picture 1110 (e.g., a menu to support this is displayed upon selecting the picture), edit the label 1120 (e.g., text editing is operative in the label field), edit where the contact object will appear 1130 (FIG. 13 illustrates a drop down menu 1310 for designating where the contact object will appear), and mark the contact item as a favorite 1140.

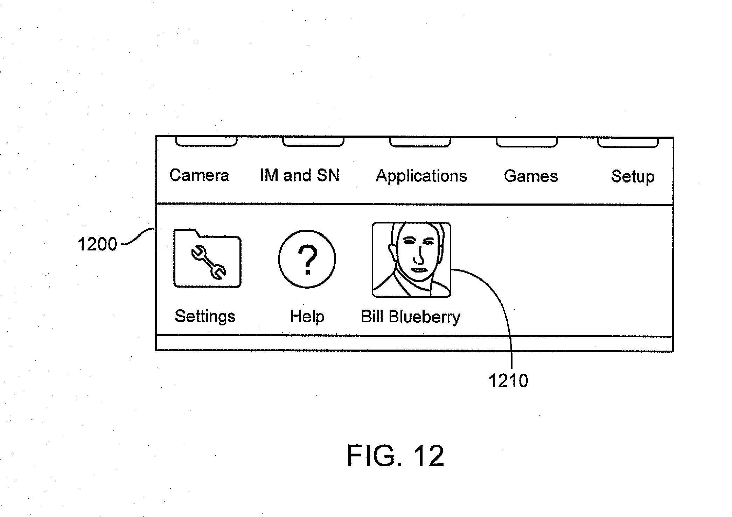

In some embodiments, the technology allows the user to click on the picture icon 1100, whereupon a pictures application is launched, allowing a user to select a picture. In some embodiments, changing the picture in this fashion will change the picture associated with the contact in other device applications such as Instant Messenger. After adding 1150 the contact item to the indicated location, the device can re-display the Contacts application screen, e.g., as shown in FIG. 9, and the contact item will appear on the indicated location, e.g., the home screen 1200 as shown in FIG. 12 as a contact object 1210.

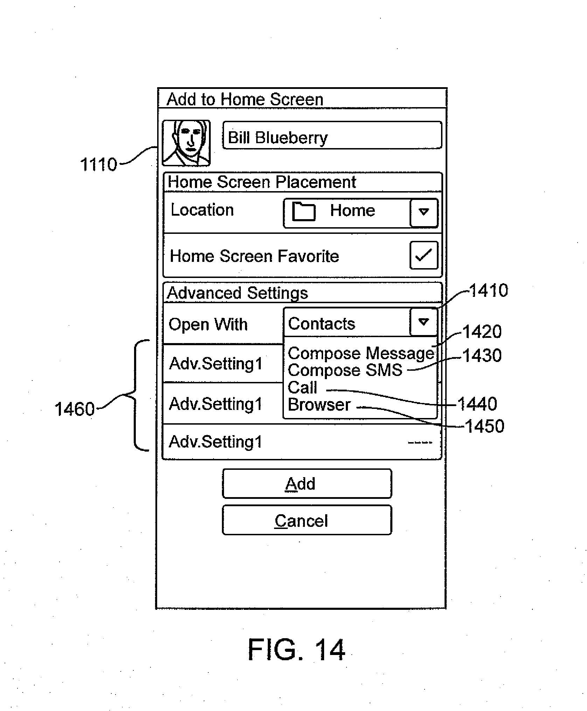

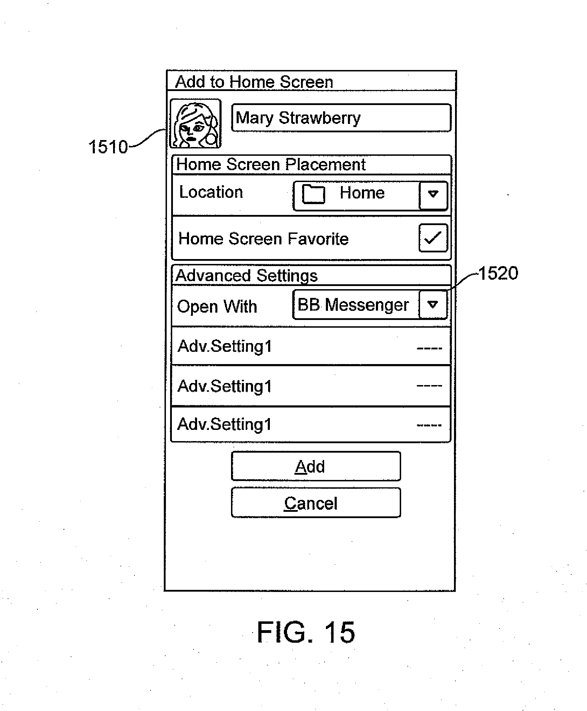

The technology can present Advanced Options 1160 to a user, e.g., as shown in FIG. 14. An exemplary advanced option is to choose the action that occurs when the contact object 1210 is selected from the home screen. FIG. 14 illustrated example choices as opening the contact for the contact item 1410, composing an e-mail message to the contact 1420, composing an SMS message to the contact 1430, calling the contact 1440, and opening a browser to a page associated with the contact 1450. Each of these options is facilitated by the data contained in the contact for the particular communication service. Other advanced options can be accommodated for specialized interaction with other device features. FIG. 15 illustrates a contact object creation screen employing advanced options 1160 to associate a contact object for contact 1510 with BB Messenger application as the default application when the contact object is chosen from the home screen of the device.

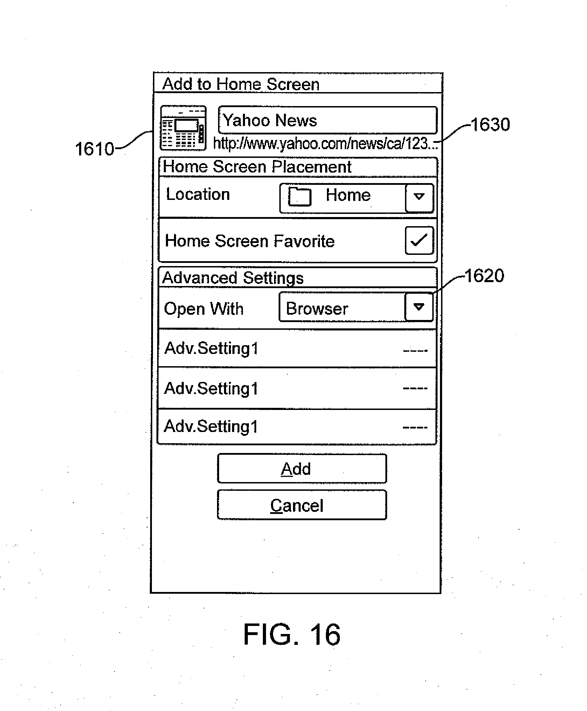

FIG. 16 illustrates use of the contact object concept extended to place a contact object for "Yahoo News" including picture 1610 on the home screen with a default action of opening a web browser 1620 to the uniform resource locator (URL) indicated by 1630.

The technology, upon adding a contact object to device screen, can use the settings for adding that contact object as the default for configuring the next contact object, e.g., the last configuration remains "sticky." For example if a user adds a contact /web page to the media folder and marks the contact object as a favorite, those settings, i.e., location is media folder," and "Home Screen Favorite" is checked. This approach allows the user to configure contact objects easier and does not require the user to repeatedly adjust the settings from a device default if the default settings are not the most typical settings desired by the user.

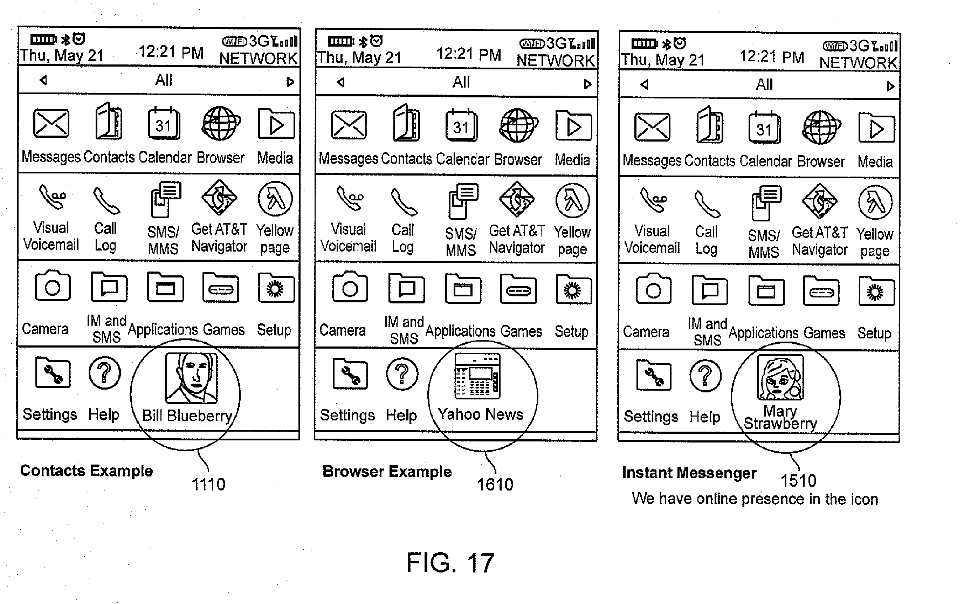

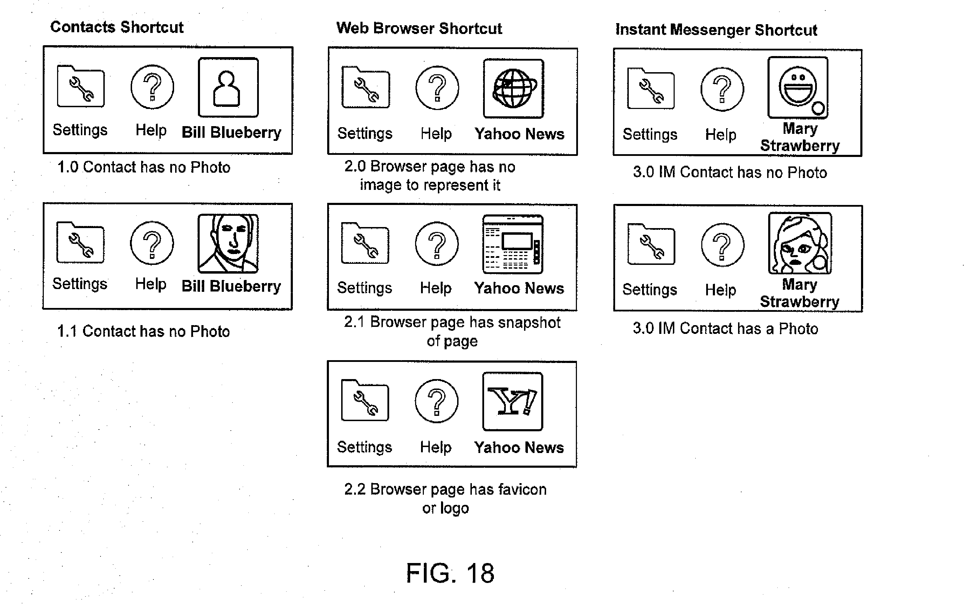

FIG. 17 illustrates the resultant home screen display of the contact objects, disclosed abave. FIG. 18 illustrates example icon types that can be used for contact objects.

In embodiments of the technology, status information and action choices can be displayed in conventional menus or in graphical menus.

Embodiments of the technology can be implemented as a computer program product resident on the device as an application, as an element of the operating system 408, as an element of the menu module, as a separate module, or across a combination of such modules.

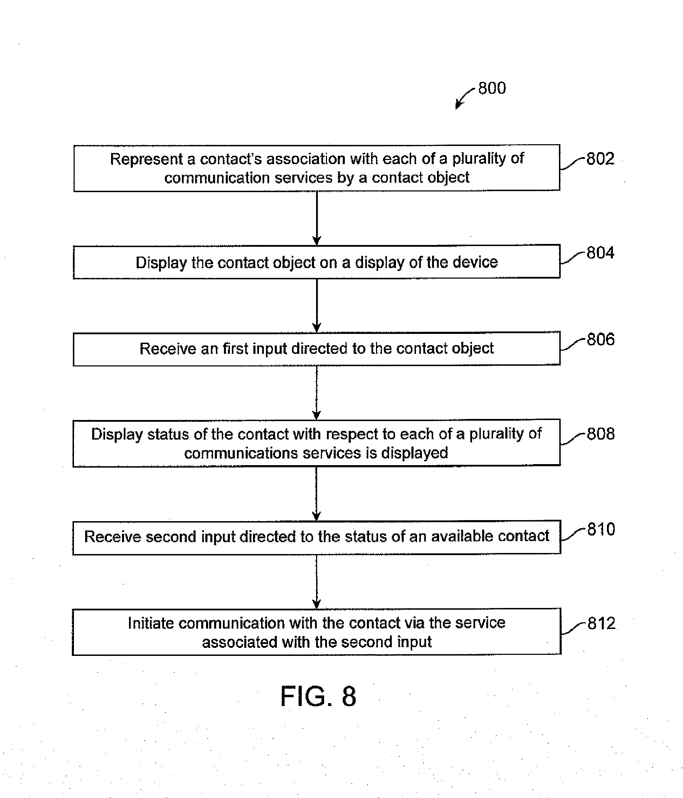

Embodiments of the technology include processor-implemented methods for communicating with a contact over a communications service accessible via a mobile communications device. Referring to FIG. 8 as an exemplary one of those methods, a contact's association with each of a plurality of communication services is represented by a contact object in the device 802. The device then displays the contact object on a display of the device 804, and monitors for input directed to the contact object. Upon receiving an input directed to the contact object 806, the status of the contact with respect to each of a plurality of communications services is displayed 808. For a displayed status indicating "available," or the equivalent thereof, upon receiving a user second input directed to the "available," or equivalent thereof, displayed status 810, the method initiates communication with the contact via the service associated with the available status indicated by the second input 812. In some embodiments, the contact object further specifies a default communication service, and the instructions are further operative in response to receiving a first input directed to the contact object, to initiate communication with the contact using the default communication service 814.

In some embodiments, the contact object is displayed on the home page of the device. In some embodiments, the first input is a hover over the contact object. IN some embodiments, the first input is a click. In some embodiments, the display is a touch screen and the input is a touch-and-hold.

The technology can take the form of an entirely hardware embodiment, an entirely software embodiment or an embodiment containing both hardware and software elements. In one embodiment, the technology is implemented in software, which includes but is not limited to firmware, resident software, microcode, etc. Furthermore, the technology can take the form of a computer program product accessible from a computer-usable or computer-readable medium providing program code for use by or in connection with a computer or any instruction execution system. For the purposes of this description, a computer-usable or computer readable medium can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium (though propagation mediums in and of themselves as signal carriers are not included in the definition of physical computer-readable medium). Examples of a physical computer-readable medium include a semiconductor or solid state memory, magnetic tape, a removable computer diskette, a random access memory (RAM), a read-only memory (ROM), a rigid magnetic disk and an optical disk. Current examples of optical disks include compact disk - read only memory (CD-ROM), compact disk- read/write (CD-R/W) and DVD. Both processors and program code for implementing each as aspect of the technology can be centralized or distributed (or a combination thereof) as known to those skilled in the art.

A data processing system suitable for storing program code and for executing program code will include at least one processor coupled directly or indirectly to memory elements through a system bus. The memory elements can include local memory employed during actual execution of the program code, bulk storage, and cache memories that provide temporary storage of at least some program code in order to reduce the number of times code must be retrieved from bulk storage during execution. Input/output or I/O devices (including but not limited to keyboards, displays, pointing devices, etc.) can be coupled to the system either directly or through intervening I/O controllers. Network adapters may also be coupled to the system to enable the data processing system to become coupled to other data processing systems or remote printers or storage devices through intervening private or public networks. Modems, cable modem and Ethernet cards are just a few of the currently available types of network adapters.

## Claims

1. A processor-implemented method for communicating with a contact over one of a plurality of communications services accessible via a mobile communications device, the processor-implemented method comprising:
representing a contact's association with each of a plurality of communication services by a contact object (802);
displaying the contact object on a display of the device (804);
receiving a first input directed to the contact object (806);
in response to receiving the first input directed to the contact object, displaying, on the
display, the status of the contact with respect to each of a plurality of communication services (808); and
for a displayed status indicating "available," or an equivalent thereof, upon receiving
a user second input directed to the "available," or equivalent thereof, displayed status, initiating communication with the contact via the service associated with the available status (810).

2. The processor-implemented method of Claim 1, wherein the instructions are further operative to:
for a displayed status indicating "available," or an equivalent thereof, upon receiving
a user second input directed to the "available," or equivalent thereof, displayed status, initiate communication with the contact via the service associated with the available status (812).

3. The processor-implemented method of Claim 1, wherein:
the contact object further specifies a default communication service, and
the instructions are further operative in response to receiving a first input directed to
the contact object, to initiate communication with the contact using the default communication service (814).

4. The processor-implemented method of any one of Claim 1 through Claim 3, wherein the contact object is displayed on a home screen of the device.

5. The processor-implemented method of any one of Claim 1 through Claim 4, wherein the first input comprises a hover event.

6. The processor-implemented method of any one of Claim 1 through Claim 4, wherein the first input comprises a click event.

7. The processor-implemented method of any one of Claim 1 through Claim 4, wherein display comprises a touch screen and wherein the first input comprises a touch-and-hold event.

8. A computer program product for communicating with a contact over one of a plurality of communications services accessible via a mobile communications device, the computer program product comprising:
at least one computer-readable medium,
at least one contact object module,
residing on the medium, and
operative to, upon execution by a processor to perform the method of any one
of Claim 1 through Claim 7.

9. A system for communicating with a contact over one of a plurality of communications services accessible via a mobile communications device, the system comprising:
at least one processor;
at least one computer-readable medium in communication with the at least one processor module; and
at least one contact object module
residing on the medium, and
comprising instructions, that upon execution by the at least one processor to
are operative to perform the method of any one of Claim 1 through Claim 7.
